# EUROPEAN PATENT APPLICATION

(11) **EP 2 808 583 A1**
(43) Date of publication of application: **03.12.2014**
(21) Application number: 14169748.2
(22) Date of filing: 23.05.2014
(51) Int. Cl.: F16J 15/02, F16J 15/06, F16J 15/12, E03D 9/10, E03C 1/26

(54) **Seal apparatus and assembly method**

(30) Priority: 30.05.2013 GB 201309703
(71) Applicant: The Haigh Engineering Company Ltd, Ross-on-Wye , Hertfordshire HR9 5NG (GB)
(72) Inventor: Price, Martin, Herefordshire HR9 5NG (GB)
(74) Representative: Suèr, Steven Johannes

(57) **Abstract**

The present invention relates to seal apparatus (1), the apparatus comprising a resilient elongate strip (2) having a substantially U-shaped cross-section forming an apex (10) from which depends a pair of walls (8,9), the apex of the U-shape forming a compressible bulb element (10), wherein opposing surfaces of the walls (8,9) have inter-engaging formations (5,6) for holding them in position.

## Description

The present invention relates to a seal apparatus, a sealing element and a seal apparatus assembly method, and more particularly to these for use with waste disposal apparatus.

In this connection, due to the nature of the products being disposed of in waste disposal units, e.g. macerators, such as human waste etc, and the fact that an opening is provided to insert such waste, an effective lid seal is essential. Apart from the practical problems experienced with a leaking seal, for example soiling, there can be more serious microbiological issues with aerosol emissions.

Current designs use rubber seals of silicon, neoprene or similar materials, fastened either to the macerator lid or to the macerator body itself. These seals are generally solid in cross-section although shapes are provided to facilitate sealing features. In order to optimise their sealing properties when used with lids and bodies having variation of form and manufacturing tolerance, the seals are often formed with very soft materials, which can take up such variation to a degree.

However, there is a limit to the extent of variation that can be accommodated and furthermore using such soft materials means the seals wear and degrade quickly, thereby reducing their operating lifespan.

According to the present invention there is provided seal apparatus comprising a resilient elongate strip having a substantially U-shaped cross-section forming an apex from which depends a pair of walls, the apex of the U-shape forming a compressible bulb element, wherein opposing surfaces of the walls have inter-engaging formations for holding them in position. In this manner a highly flexible seal can be readily manufactured, formed of durable materials.

Preferably, the formations comprise one or more protrusions on one of said side walls and one or more recesses on the other of the side walls. Such formations enable the walls of the seal apparatus to be accurately and securely coupled.

Conveniently, a gap is defined between the opposing walls when the one or more protrusions and one or more recesses are fully engaged. The gap is provided for housing a support in the form of a carrier member.

Preferably, the apparatus further comprises one or more ribs extending along the outer surface of one of said walls. Such ribs enhance the overall sealing properties of the seal apparatus.

The resilient elongate strip may be formed into an annular ring defining an annular seal. As such the seal apparatus can be used as a circular seal, for example for fully sealing a circular chamber of a macerator.

Preferably, the strip is formed of plastics materials, such as PVC, rubber or neoprene.

The seal apparatus may further comprise a carrier member provided between the walls of the strip. The carrier member provides support to the seal apparatus and a means of facilitating mounting of the seal apparatus to an article requiring a seal.

Conveniently the carrier member is formed of metal, although other suitable substantially rigid materials may be used.

The carrier member can be an elongate strip formed with one or more apertures dimensioned to align with said formations. The carrier member is as such sandwiched between the inner and outer walls of the resilient elongate strip.

Preferably, the carrier member further has a deformable tab projecting normally to its longitudinal extent. The tab is used for securing the seal apparatus to an article requiring a seal.

The resilient elongate strip may have a deformable protrusion projecting normally to its longitudinal extent. This may be used to secure the seal apparatus to an article requiring a seal.

According to a further aspect of the present invention there is provided seal element comprising:- a resilient elongate strip folded to produce a bulb seal at one end, the free ends of the strip forming opposing walls depending from the bulb seal, the walls having inter-engaging formations for holding them in position relative to one another.

Preferably, the opposing walls form a channel in which a substantially rigid carrier member is mounted.

Conveniently the carrier member has a plurality of slots, through which the formations can pass.

According to a further aspect of the present invention there is provided a method of assembling a sealing element, the method comprising:-providing an elongate sealing strip formed of flexible resilient material; providing an elongate carrier member; mounting the carrier member to the sealing strip, the sealing strip being substantially U-shaped in cross-section to thereby form opposing faces of a channel into which the carrier member is provided, the opposing faces of the channel having interlocking formations which interlock to hold the carrier member in place. Preferably, the carrier member has one or more apertures through which the interlocking formations protrude.

The elongate sealing strip is preferably formed using open moulding techniques.

Conveniently the carrier member and/or sealing strip have deformable protrusions for securing the sealing element to an article requiring a sealing element, the deformable protrusions in use extending through corresponding apertures in the article, the protrusions being deformable to resist retraction of the protrusions to thereby secure the sealing element in place. The deformable protrusions can be twistable tabs.

An embodiment of the present invention will now be described by way of example and with reference to the accompanying drawings, of which:-
Figure 1 shows a part cross-sectional view through a seal element of the present invention;
Figures 2A and 2B show cross-sectional views of a seal member of the present invention;
Figure 3 shows an assembled seal assembly of the present invention;
Figure 4 shows a view of a carrier member of the present invention;
Figures 5A and 5B show views of a section of the seal element of the present invention; and
Figures 6A and 6B show views of an alternative embodiment of a seal element of the present invention.

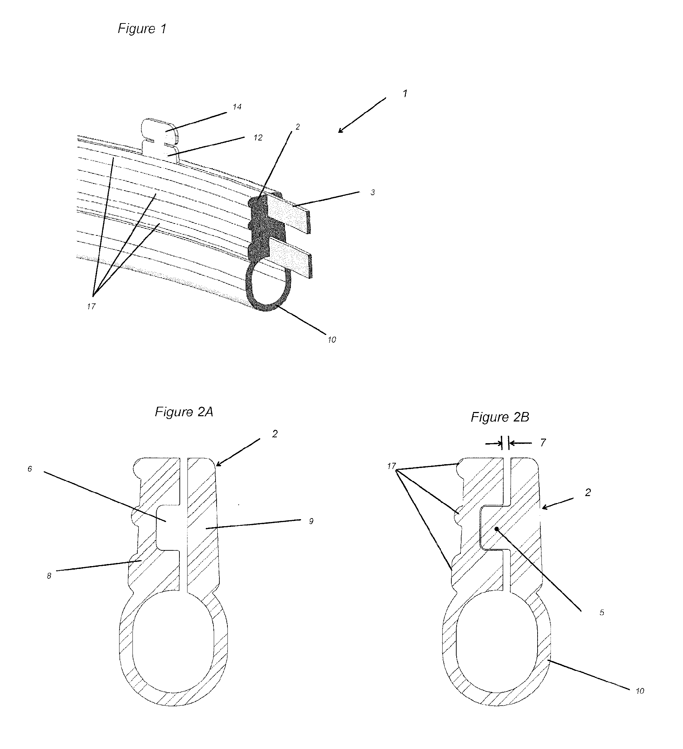

In this connection, Figure 1 shows a view in part cross-section of an assembled seal element 1 of the present invention, the seal element having a seal member 2 mounted on a carrier member 3. The carrier member acts to provide support to the seal element and provides a substrate for facilitating mounting of the assembled seal element on an article requiring a seal.

The seal member 2 is shown in cross-section in Figures 2A and 2B, which are cross sections at different parts of the seal element to show the interlocking protrusion formation 5 and corresponding recess 6. As shown in Figures 2A and 2B, when the protrusion formation 5 is inter-engaged with the recess 6, there is a small gap 7 between the opposing surfaces of walls 8, 9 of the seal. This is to accommodate the carrier member 3 that is sandwiched between the opposing faces of the walls 8, 9. The inter-engagement of the walls on the carrier member clamps it in place, with the formations 5 passing through apertures 16 in the carrier member 3.

The seal member includes a bulb portion 10, formed as a longitudinal bulb channel, which is effectively closed by bringing the walls 8 and 9 together. The inter-engagement of the formations and recesses of the seal member ensure that the bulb channel is correctly formed. This bulb channel presents a hollow readily compressible pillow that provides a highly flexible and resilient sealing element. The bulb channel is mechanically soft and capable of accommodating tolerances.

The seal member can also be readily manufactured using open moulding processes.

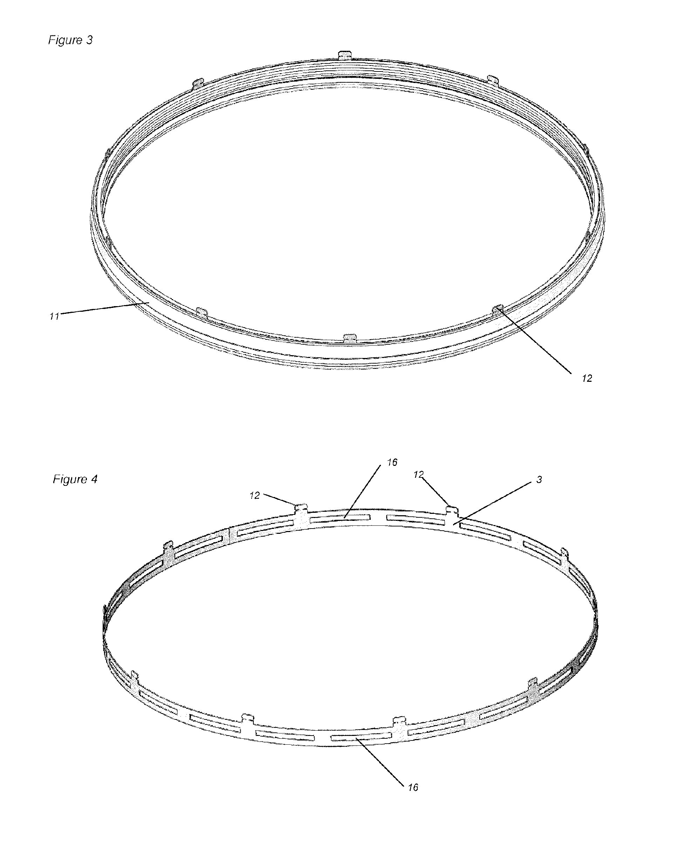

As shown in Figure 3, the seal element can be formed as an annular member 11, in this case for use with a circular lid.

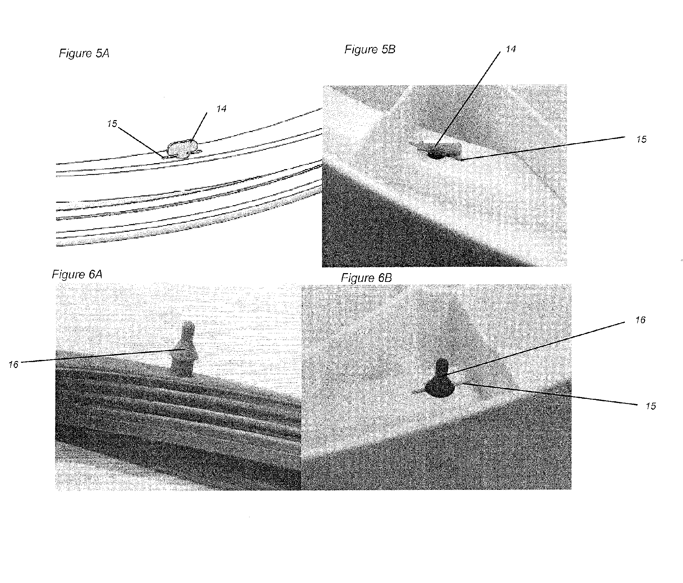

The carrier member 3 is shown in Figure 4 and also has a corresponding annular configuration for use with the annular seal element of Figure 3. As shown, the carrier includes a number of tabs 12 which extend upwardly from the longitudinal extent of the carrier member. These tabs 12 are formed as shown in Figures 5A and 5B with a deformable upper section 14 which can be twisted to secure the seal element in position. In this connection, the tabs are arranged to pass through corresponding apertures 15 in an article requiring the seal, such as a macerator lid, the deformable portions being deformed once through the apertures 15 in the structure of the lid to secure the seal element in position.

Figures 6A and 6B show an alternative arrangement where the seal member itself is formed with an upwardly extending resilient projection 16. The resilient projection 16 may have a mushroom profile which allows it to be pushed through an aperture 15 and then to latch, to resist its withdrawal.

In order to assemble the seal element, the carrier 3 is first located within a channel formed between the walls formed by walls 8 and 9. The formations 5 are aligned with the slotted apertures in the carrier 3 so that they pass through the carrier member and inter-engage with the recesses 6.

The carrier member 3 is as such sandwiched between inner and outer walls 8, 9 of the seal member 2. The assembled seal element 1 can then be attached to a suitable article, such as a macerator lid. This is achieved by passing the protrusions 14 or 16 through apertures 15 in the article, the protrusions deforming or being deformed to secure the seal element in place.

As shown in Figure 1, the seal element may have a profile having ribs 17 to further enhance its sealing effectiveness.

It will be understood that variants of the preferred features are possible within the scope of the appended claims.

For example, whilst the sealing element can be formed of plastics, rubber or neoprene, other suitable resilient materials may be used. Further, whilst the carrier member may be formed of metal, any suitable substantially rigid material may be employed.

Moreover, whilst the bulb channel is shown as having a substantially oval cross-section, alternative suitable cross-sections are possible.

The present invention as such relates to an open moulded bulb seal design which when closed provides the required section. It is mounted onto a carrier member in the form of a ring that provides stability to the moulding and allows it to be easily assembled.

The carrier member enables the seal element to be assembled much easier as it can be pulled into position (stretching and thinning the material section) rather than pushing it in (compressing and bulging the material section). The carrier member can itself be either insert moulded so that it forms part of the finished component or preferably it is loose. In the preferred method the inter-engaging formations, e.g. castellations, are moulded into the seal member and interlock with the carrier member.

In a preferred embodiment the carrier member is sheet steel profiled to shape. Alternatively, the seal element could be a incorporated into a plastic moulded carrier that is mechanically fastened to a housing (e.g. a macerator lid or top).

A further alternative method in mounting the seal element would be to mould it open, and to close the seal element (with the aid of an adhesive if preferred) and then bond the seal into the housing. Further, the seal element can be held in position by means of moulded features, such as for example mushrooms profiled projections.

## Claims

1. Seal apparatus comprising a resilient elongate strip having a substantially U-shaped cross-section forming an apex from which depends a pair of walls, the apex of the U-shape forming a compressible bulb element, wherein opposing surfaces of the walls have inter-engaging formations for holding them in position.

2. Seal apparatus according to claim 1, wherein the formations comprise one or more protrusions on one of said side walls and one or more recesses on the other of the side walls.

3. Seal apparatus according to claim 2, wherein a gap is defined between the opposing walls when the one or more protrusions and one or more recesses are fully engaged.

4. Seal apparatus according to any preceding claim, and any of:
a) further comprising one or more ribs extending along the outer surface of one of said walls; or
b) wherein the strip is formed into an annular ring defining an annular seal; or
c) wherein the strip is formed of a plastics material; or
d) wherein the resilient elongate strip has a deformable protrusion projecting normally to its longitudinal extent.

5. Seal apparatus according to any preceding claim, further comprising a carrier member provided between the walls of the strip.

6. Seal apparatus according to claim 5, wherein the carrier member is formed of metal.

7. Seal apparatus according to claim 5 or 6, wherein the carrier member is an elongate strip formed with one or more apertures dimensioned to align with said formations.

8. Seal apparatus according to any one of claims 5, 6 or 7, wherein the carrier member further has a deformable tab projecting normally to its longitudinal extent.

9. A seal element comprising:-
a resilient elongate strip folded to produce a bulb seal at one end,
the free ends of the strip forming opposing walls depending from the bulb seal, the walls having inter-engaging formations for holding them in position relative to one another.

10. A sealing element according to claim 9, wherein the opposing walls form a channel in which a substantially rigid carrier member is mounted.

11. A sealing element according to claim 10, wherein the carrier member has a plurality of slots, through which the formations can pass.

12. A method of assembling a sealing element, the method comprising:- providing an elongate sealing strip formed of flexible resilient material; providing an elongate carrier member; mounting the carrier member to the sealing strip, the sealing strip being substantially U-shaped in cross-section to thereby form opposing faces of a channel into which the carrier member is provided, the opposing faces of the channel having interlocking formations which interlock to hold the carrier member in place.

13. A method of assembling a sealing element according to claim 12, wherein the carrier member has one or more apertures through which the interlocking formations protrude.

14. A method of assembling a sealing element according to claim 12 or 13, wherein the carrier member and/or sealing strip have deformable protrusions for securing the sealing element to an article requiring a sealing element, the deformable protrusions in use extending through corresponding apertures in the article, the protrusions being deformable to resist retraction of the protrusions to thereby secure the sealing element in place.

15. A method of assembling a sealing element according to any one of claims 12 to 14, wherein the deformable protrusions are twistable tabs.
